# EUROPÄISCHE PATENTSCHRIFT

(11) **EP 0 672 247 B1**
(45) Veröffentlichungstag und Bekanntmachung des Hinweises auf die Patenterteilung: **05.02.1997**
(21) Anmeldenummer: 94900736.3
(22) Anmeldetag: 27.11.1993
(51) Int. Cl.: G01N 27/407

(54) **HOCHAKTIVE ELEKTRODEN FÜR ABGASSENSOREN**
HIGHLY ACTIVE ELECTRODES FOR EXHAUST GAS SENSORS
ELECTRODES A HAUTE ACTIVITE POUR CAPTEURS DE GAZ D'ECHAPPEMENT

(30) Priorität: 01.12.1992 DE 4240267
(43) Veröffentlichungstag der Anmeldung: 20.09.1995
(73) Patentinhaber: ROBERT BOSCH GMBH, 70442 Stuttgart (DE)
(72) Erfinder: FRIESE, Karl-Hermann, D-71229 Leonberg (DE); WIEDENMANN, Hans-Martin, D-70195 Stuttgart (DE); STANGLMEIER, Frank, D-71696 Möglingen (DE)
(86) Internationale Anmeldenummer: DE9301136
(87) Internationale Veröffentlichungsnummer: WO9412870

(56) Entgegenhaltungen:
- WO-A-91/06002
- WO-A-92/12420
- DE-A- 2 631 721
- DE-A- 2 852 638
- DE-A- 2 852 647
- DE-A- 3 942 384
- US-A- 4 372 824
- US-A- 5 141 825

## Beschreibung

### Stand der Technik

Es ist z.B. aus der DE-A3-28 52 638 bekannt, daß sich der Sauerstoffgehalt von Gasgemischen, beispielsweise von Abgasen aus Verbrennungsmotoren, nach dem Prinzip einer Sauerstoffkonzentrationskette unter Verwendung von Sensoren bestimmen läßt, die auf der Sauerstoffionenleitfähigkeit bestimmter stabilisierter Oxide, vorzugsweise von voll- oder teilstabilisiertem Zirkon(IV)-oxid, beruhen. Als Elektroden eignen sich z.B. die sogenannten Cermet-Elektroden, die u.a. aus der DE-A1-26 19 746 bekannt sind. Sie bestehen im allgemeinen aus Platin und stabilisiertem Zirkonoxid und sind zur Verwendung in Gassensoren sehr gut geeignet. Die einander berührenden Platinteilchen bewirken die Einstellung des Gasgleichgewichtes, indem sie die Reaktion des Sauerstoffs mit den oxidierbaren Anteilen des Gasgemisches katalysieren, und fungieren zugleich als Elektronenleiter, d.h. sie leiten den Strom, der infolge der Ionenwanderung im Zirkon(IV)-oxid als Festelektrolyt fließt. Das stabilisierte Zirkon(IV)-oxid stellt dagegen eine ionenleitende Verbindung zwischen den Platinteilchen der Cermet-Elektrode und dem Festelektrolyten her.

Da die Abgassensoren thermischen, mechanischen und ggf. auch korrosiven Beanspruchungen ausgesetzt sind, müssen die Cermet-Elektroden mit dem Festelektrolyten möglichst fest verbunden sein. Dies erreicht man am besten durch Co-sintern. Dabei geht man von dem ungesinterten, für den späteren Gebrauch zweckentsprechend geformten feinteiligen Oxidgemisch aus, das nach dem Sintern den Festelektrolyten ergibt, und bringt auf den so entstandenen Formkörper die Grundmasse der späteren Cermet-Elektrode auf, beispielsweise indem man ein angepastetes feinteiliges Platin/Zirkon(IV)-oxid-Gemisch auf den Formkörper aufträgt. Nach dem Trocknen werden Festelektrolyt und Cermet-Elektrode, im allgemeinen bei 1300 bis 1600°C, fest zusammengesintert.

Die Cermet-Elektroden sind danach praktisch untrennbar mit dem Festelektrolyten verbunden. Jedoch sind die elektrischen Eigenschaften der Elektroden nicht voll befriedigend. Cermet-Elektroden, die den hohen Sintertemperaturen ausgesetzt waren, sind deutlich weniger empfindlich und weniger belastbar als die nicht gesinterten. Sie neigen in höherem Maße zur Polarisierung, d.h. es baut sich eine Gegenspannung auf, die das Spannungssignal der Sonde so sehr schwächen kann, daß es ohne aufwendige Verstärkung nicht mehr auswertbar ist.

### Vorteile der Erfindung

Die hochempfindlichen Elektroden nach den Patentansprüchen 1 bis 3, hergestellt nach den Verfahren der Patentansprüche 4 bis 8 und verwendet nach Patentanspruch 9, verbinden eine hohe thermische, mechanische und Korrosionsstabilität, die durch die Sinterverbindung von Elektrode und Festelektrolyt bewirkt wird, mit einer Empfindlichkeit bzw. Belastbarkeit, wie sie bisher nur ungesinterten Cermet-Elektroden zueigen war. Sensoren mit den Elektroden nach der Erfindung haben eine lange Lebensdauer und kommen ohne aufwendige Verstärkung der Spannungssignale aus. Zudem zeichnen sich diese Sensoren durch eine ungewöhnlich enge Streuung der Meßergebnisse verschiedener Exemplare gleichen Typs aus, insbesondere bei niedrigen Anwendungstemperaturen, z.B. unterhalb von 300°C.

### Beschreibung der Erfindung

Die Elektroden bestehen zunächst aus den üblichen Cermet-Elektroden und den üblichen Festelektrolyten. Im Interesse einer festen Sinterverbindung ist es zweckmäßig, für die Cermet-Elektrode und für den Festelektrolyten dieselben Metalloxide zu wählen. Vorteilhaft setzt man für den Festelektrolyten teilstabilisiertes und für das Stützgerüst der Cermet-Elektrode vollstabilisiertes Zirkon(IV)-oxid ein, wie es in der DE-A3-28 52 638 beschrieben ist.

Die Mengenverhältnisse der metallischen und der keramischen Bestandteile sollten so bemessen sein, daß einerseits die Platinteilchen einander berühren und Elektronenleitung ermöglichen und andererseits genügend Zirkon(IV)-oxid für Sauerstoffionenleitung vorhanden ist. Im allgemeinen liegt der Anteil des Platins zwischen 50 und 80 Vol%. Beim Sinterprozeß entsteht eine feine Porenstruktur, die das spätere Aufbringen von katalytisch aktivem Material erleichtert.

Der Festelektrolyt besteht in der Regel aus Zirkon(IV)-oxid, das mit einem Oxid eines dreiwertigen Metalles der 2. Nebengruppe des Periodensystems der Elemente stabilisiert, zweckmäßig teilstabilisiert ist, beispielsweise mit Scandiumoxid, vorzugsweise aber mit Yttriumoxid oder einem Oxid eines Elementes der höheren seltenen Erden. Unter höheren seltenen Erden werden solche mit einer Ordnungszahl > 64 verstanden. Als Beispiele seien Erbium(III)-oxid, Dysprosium(III)-oxid und Ytterbium(III)-oxid genannt. Die für eine Teilstabilisierung optimalen Mengen lassen sich durch Vorversuche unschwer ermitteln. Für das System Zirkon(IV)-oxid/ Ytterbium-(III)-oxid liegen sie bei 4 bis 7 Mol%. An Stelle von oder neben Zirkon(IV)-oxid lassen sich auch die anderen als Ionenleiter bekannten Metalloxide einsetzen, z.B. Hafnium(IV)-oxid oder Cer(IV)-oxid.

Zur Herstellung der Elektroden nach der Erfindung formt man in üblicher Weise das feinteilige Material, das später den Festelektrolyten ergibt, der gewünschten Form entsprechend, beispielsweise zu einem am einen Ende geschlossenen Rohr, wie es aus der DE-A2-22 65 309 bekannt ist. Dann bringt man das Gemisch, das später zur Cermet-Elektrode wird, als Paste oder Suspension an der Stelle oder an den Stellen auf, an denen die Cermet-Elektrode erwünscht ist. Bei Sensoren für Abgase von Verbrennungsmotoren ist das die äußere und die innere Seite des erwähnten einseitig geschlossenen Rohres. Dann trocknet man den Rohling und sintert ihn bei Temperaturen von 1300 bis 1600°C, insbesondere von 1350 bis 1500°C, im allgemeinen unter Atmosphärendruck. Die Dauer des Sintervorgangs hängt von der Temperatur und den gewählten Materialien bzw. der Materialkombination ab und liegt im allgemeinen zwischen 1 und 5 Stunden Haltezeit bei der Maximaltemperatur, also ausschließlich der Zeit für Aufheizen und Abkühlen.

Es ist ein wichtiges Merkmal der Erfindung, daß auf die Cermet-Elektrode n a c h dem Sintervorgang katalytisch aktives Material aufgebracht wird. Dadurch erhalten die Elektroden die ihnen eigene überraschend hohe Belastbarkeit. Man kann die Belastbarkeit von Cermet-Elektroden auch mechanisch, z.B. durch Aufrauhen mittels Schmirgel, oder chemisch, z.B. durch eine Säurebehandlung, steigern. Eleganter und effizienter geht man jedoch nach der Erfindung vor, indem man auf die poröse, gesinterte Cermet-Elektrode ein katalytisch aktives Material aufbringt. Das geschieht vorteilhaft, indem man die Elektrode mit einer Lösung mindestens einer anorganischen oder organischen Verbindung eines katalytisch aktiven Metalls, wie Platin oder Rhodium, tränkt und das Lösungsmittel verdampft. Die Verbindung scheidet sich dadurch auf der äußeren Oberfläche der Elektrode, aber auch und vor allem auf deren innerer Oberfläche, d.h. im Inneren der Poren ab. Zweckmäßig tempert man danach die Elektrode noch eine Zeit lang, z.B. bei 300 bis 900°C, wobei sich die Edelmetallverbindung zumindest teilweise zersetzen kann. Es ist vorteilhaft, danach die Elektrode mit der Verbindung des katalytisch wirksamen Metalles im Wasserstoffstrom zu erhitzen, beispielsweise bei 500 bis 600°C, wodurch metallisches Platin oder Rhodium bzw. eine Platin-Rhodium-Legierung entsteht. Der Katalysator formiert sich aber auch ohne vorhergehende Reduzierung bei erstmaligem Gebrauch unter Einsatzbedingungen, wobei entsprechende Temperaturen herrschen. Die Cermet-Elektroden erlangen dadurch die gewünschte hohe Empfindlichkeit bzw. Belastbarkeit.

Man kann auf die Elektroden nach der Erfindung die üblichen Schutzschichten aufbringen, wie das in der DE-A2-22 65 309, der DE-A3-41 00 106 oder der deutschen Patentanmeldung P 40 33 388.4 beschrieben ist.

### Beispiele

### Testmethoden

1. Bewertung des Wechselstrominnenwiderstandes
   Der Wechselstrominnenwiderstand bei 500°C ist ein Maß für die Qualität der Verbindung von Elektrode und Elektrolyt. Der Wechselstrominnenwiderstand der Elektrode nach dem Vergleichsbeispiel 1 wurde =100% gesetzt. Ein geringerer Wechselstrominnenwiderstand weist auf einen innigeren Kontakt bzw. eine festere Verbindung zwischen Elektrode und Elektrolyt hin.
2. Bewertung der Polarisation
   Ein Maß für die Polarisation ist der infolge eines Stromflusses durch den Elektrolyten aufgeprägte oder durch Belastung des Signal sich ausbildende Gleichstrominnenwiderstand. Der Gleichstrominnenwiderstand der Elektrode nach dem Vergleichsbeispiel 1 wurde wiederum =100% gesetzt. Ein geringerer Gleichstrominnenwiderstand bedeutet eine höhere Belastbarkeit des Signals.
3. Bewertung des Niedertemperaturverhaltens
   Das Niedertemperaturverhalten von Gassensoren im Abgas eines Verbrennungsmotors wurde bewertet. Die Sensoren wurden in die Abgasleitung eingebaut, und der Signalhub des Sensors infolge der Oszillation im Luft/Kraftstoff-Verhältnis bei 300°C wurde aufgezeichnet. Der Signalhub des Sensors mit der Elektrode nach dem Vergleichsbeispiel 1 wurde =100% gesetzt. Ein höherer Wert, d.h. ein größerer Signalhub, bedeutet ein verbessertes Signalverhalten bei niedrigen Temperaturen.

Die Ergebnisse der Tests sind in der Tabelle zusammengefaßt.

### Beispiel 1 (Vergleichsbeispiel nach dem Stand der Technik)

Der Festelektrolyt besteht aus mit Yttrium(III)-oxid stabilisiertem Zirkon(IV)-oxid (4 Mol% Yttrium(III)-oxid, 96 Mol% Zirkon(IV)-oxid). Die Cermet-Elektrode wurde nach dem Verfahren der DE-A3-28 52 638 als Paste mit 60 Vol% Platin und 40 Vol% vollstabilisiertem Zirkon(IV)-oxid aufgebracht. Durch Cosintern bei 1500°C (5 Stunden) erhält man das fertige Sensorelement.

### Beispiel 2

Das gesinterte Sensorelement des Beispiels 1 wurde mit einer wässerigen Lösung eines katalytisch aktiven Materials getränkt. Dazu wurde eine Lösung von Hexachloroplatin(IV)-säure und von Rhodium(III)-chlorid im Gewichtsverhältnis Pt:Rh von 5:2 verwendet. Die Konzentrationen der Edelmetalle in den Lösungen betrugen 1 Gew% Platin und 0,4 Gew.% Rhodium. Die Lösung wirkte 5 Minuten bei einem Druck von 100 mbar auf das Sensorelement ein, dann wurde der Druck auf 1 bar gesteigert.

Das getränkte Sensorelement wurde bei 100°C 0,5 Stunden an der Luft getrocknet, danach weitere 0,5 Stunden bei 350°C an der Luft getempert, und anschließend wurden die abgeschiedenen Edelmetallverbindungen im Wasserstoffstrom reduziert (550°C, 1 Stunde).

### Beispiel 3

Das gesinterte Sensorelement des Beipiels 1 wurde mit Lösungen organischer Platinverbindungen getränkt. Dazu wurde eine Lösung des Platin(II)-salzes von 2-Ethylhexansäure oder Naphthensäure oder Platin(II)-acetylacetonat in Benzylalkohol mit einem Platingehalt von jeweils 1,5 Gew.% verwendet. Das Sensorelement wurde wie im Beispiel 2 getränkt und getrocknet. Danach wurde es 0,5 Stunden bei 850°C an der Luft getempert und bei 550°C eine Stunde lang im Wasserstoffstrom erhitzt.

Die Meßergebnisse waren bei allen 3 genannten Platinverbindungen praktisch identisch.

**Tabelle**

| | Beispiel 1 (Vergleich) % | Beispiel 2 % | Beispiel 3 % |
|---|---|---|---|
| Test 1 | | | |
| Wechselstrominnenwiderstand | 100 | 92 | 89 |
| | | | |
| Test 2 | | | |
| Gleichstrominnenwiderstand | 100 | 85 | 86 |
| | | | |
| Test 3 | | | |
| Niedertemperaturverhalten im Abgas | 100 | 210 | 195 |

## Patentansprüche

1. Hochaktive Elektrode für einen Abgassensor, bestehend aus einer mit einem Sauerstoffionen leitenden Festelektrolyten durch Co-sintern bei 1300 bis 1600°C verbundenen Cermet-Elektrode, die ein nach dem Co-sintern aufgebrachtes katalytisch aktives Material enthält.

2. Hochaktive Elektrode nach Anspruch 1, dadurch gekennzeichnet, daß der Festelektrolyt teilstabilisiertes und das Stützgerüst der Cermet-Elektrode vollstabilisiertes Zirkon-(IV)-oxid ist.

3. Hochaktive Elektrode nach Anspruch 1 oder 2, dadurch gekennzeichnet, daß das katalytisch aktive Material Platin und bzw. oder Rhodium enthält.

4. Verfahren zur Herstellung einer hochaktiven Elektrode für einen Abgassensor nach Anspruch 1, dadurch gekennzeichnet, daß man einen ungesinterten, Sauerstoffionen leitenden Festelektrolyten und eine Cermet-Elektrode durch Co-sintern bei 1300 bis 1600°C fest miteinander verbindet und danach in die Poren der Cermet-Elektrode ein katalytisch aktives Material einbringt.

5. Verfahren nach Anspruch 4, dadurch gekennzeichnet, daß man für den Festelektrolyten teilstabilisiertes und für das Stützgerüst der Cermet-Elektrode vollstabilisiertes Zirkon-(IV)-oxid verwendet.

6. Verfahren nach den Ansprüchen 4 oder 5, dadurch gekennzeichnet, daß man das katalytiscch aktive Material in die Poren einbringt, indem man die Cermet-Elektrode mit der Lösung mindestens einer anorganischen oder organischen Platin- oder Rhodiumverbindung tränkt und das Lösungsmittel verdampft.

7. Verfahren nach Anspruch 6, dadurch gekennzeichnet, daß man die Cermet-Elektrode nach dem Verdampfen des Lösungsmittels bei 300 bis 900°C tempert, wobei sich die anorganische oder organische Verbindung des Platins oder Rhodiums sich gegebenenfalls zersetzt.

8. Verfahren nach einem der Ansprüche 4 bis 7, dadurch gekennzeichnet, daß die Cermet-Elektrode vor ihrer erstmaligen Verwendung unter Wasserstoffatmosphäre erhitzt wird.

9. Verwendung der Elektroden nach den Ansprüchen 1 bis 3 in Sensoren zur Bestimmung des Sauerstoffgehaltes in Abgasen von Verbrennungsmotoren.

## Claims

1. High-activity electrode for an exhaust gas sensor, which comprises a cermet electrode which is bonded by cosintering at from 1300 to 1600°C to a solid electrolyte which conducts oxygen ions and which contains a catalytically active material applied after cosintering.

2. High-activity electrode according to claim 1, charcterized in that the solid electrolyte is partially stabilized zirconium(IV) oxide and the matrix of the cermet electrode is fully stabilized zirconium(IV) oxide.

3. High-activity electrode according to Claim 1 or 2, charcterized in that the catalytically active material contains platinum and/or rhodium.

4. Method for the fabrication of a high-activity electrode for an exhaust gas sensor according to Claim 1, characterized in that an unsintered solid electrolyte which conducts oxygen ions, and a cermet electrode are bonded to one another by cosintering at from 1300 to 1600°C and subsequently a catalytically active material is introduced into the pores of the cermet electrode.

5. Method according to Claim 4, charcterized in that partially stabilized zirconium(IV) oxide is used for the solid electrolyte and fully stabilized zirconium(IV) oxide is used for the matrix of the cermet electrode.

6. Method according to Claim 4 or 5, charcterized in that the catalytically active material is introduced into the pores by the cermet electrode being impregnated with a solution of at least one inorganic or organic platinum or rhodium compound and the solvent is evaporated.

7. Method according to Claim 6, charcterized in that the cermet electrode is tempered after evaporation of the solvent at from 300 to 900°C, the inorganic or organic compound of platinum or rhodium possibly decomposing in the process.

8. Method according to any one of Claims 4 to 7, charcterized in that the cermet electrode, prior to being used for the first time, is heated under a hydrogen atmosphere.

9. Use of the electrodes according to Claims 1 to 3 in sensors for determining the oxygen content in exhaust gases of internal combustion engines.

## Revendications

1. Electrode hautement active pour un capteur de gaz d'échappement,
consistant en
une électrode en Cermet reliée à un électrolyte solide conduisant les ions oxygène, par frittage sous Co entre 1300 et 1600°C, électrode en Cermet qui contient une matière catalytiquement active après le frittage sous Co.

2. Electrode hautement active selon la revendication 1,
caractérisée en ce que
l'électrolyte solide est de l'oxyde de zirconium (IV) partiellement stabilisé et le bâti d'appui de l'électrode en Cermet est de l'oxyde de zirconium (IV) complètement stabilisé.

3. Electrode hautement active selon la revendication 1 ou 2,
caractérisée en ce que
la matière catalytiquement active contient du platine et ou du rhodium.

4. Procédé de fabrication d'une électrode hautement active pour un capteur de gaz d'échappement selon la revendication 1,
caractérisé en ce que
on réunit solidement un électrolyte solide non fritté conduisant les ions oxygène, à une électrode en Cermet, par frittage sous Co entre 300 et 1600°C, et on amène ensuite une matière catalytiquement active dans les pores de l'électrode en Cermet.

5. Procédé selon la revendication 4,
caractérisé en ce que
on utilise, pour l'électrolyte solide, de l'oxyde de zirconium (IV) partiellement stabilisé et, pour le support d'appui de l'électrode en Cermet, de l'oxyde de zirconium (IV) complètement stabilisé.

6. Procédé selon les revendications 4 ou 5,
caractérisé en ce que
on met la matière catalytiquement active dans les pores, en imprégnant l'électrode en Cermet avec une solution d'au moins une liaison inorganique ou organique de platine ou de rhodium, et en évaporant le solvant.

7. Procédé selon la revendication 6,
caractérisé en ce que
on trempe l'électrode en Cermet, après l'évaporation du solvant entre 300 et 900°C, la liaison inorganique ou organique du platine ou du rhodium se dissolvant le cas échéant.

8. Procédé selon l'une des revendications 4 à 7,
caractérisé en ce que
l'électrode en Cermet est chauffée, avant sa première utilisation, sous atmosphère d'hydrogène.

9. Utilisation des électrodes selon la revendications 1 à 3, dans des capteurs servant à déterminer la teneur en oxygène dans les gaz d'échappement de moteurs à combustion interne.
